Europäisches Patentamt

(19) European Patent Office     (11) Publication number: **0 137 699**

Office européen des brevets                                 **A2**

(12) **EUROPEAN PATENT APPLICATION**

(21) Application number: **84305902.3**        (51) Int. Cl.⁴: **A 47 K 3/22**
                                                   **A 62 B 15/00, G 21 F 9/00**
(22) Date of filing: **29.08.84**

(30) Priority: **01.09.83 GB 8323441**          (71) Applicant: **U.K. Asbestos Plant & Machinery Limited**
                                              **Tong Hall**
                                              **Tong, West Yorkshire(GB)**

(43) Date of publication of application:
**17.04.85 Bulletin 85/16**                    (72) Inventor: **Pittman, James**
                                              **Lowood Lane Newsome**
                                              **Huddersfield W. Yorks(GB)**

(84) Designated Contracting States:
**AT BE CH DE FR GB IT LI LU NL SE**           (74) Representative: **Denmark, James**
                                              **c/o Bailey Walsh & Co. 5 York Place**
                                              **Leeds LS1 2SD Yorkshire(GB)**

(54) Portable decontamination unit.

(57) The invention provides a mobile work unit for the disposal and recovery of hazardous material, such as asbestos, removed in pieces an particles which would otherwise enter the atmosphere, wherein the pieces and particles are conveyed through a tube from the working zone to an enclosed recovery and disposal cell wherein the particles and pieces are separated from the air and bagged, and the unit has an enclosed entry and exit (or clean) cell, a decontamination cell containing operator washing facilities, the cells being accessible in sequence to operators through sealable connecting doors. The disposal and recovery cell may have further doors to which man entry trunking is connected enabling operators to move along the trunking on the one hand to the working zone and on the other hand to a disposal site for the bags, whereat there may be a skip or other container.

FIG 2.

## Portable Decontamination Unit

_____

The invention relates to a portable unit for use in the collection and disposal of hazardous wastes, particularly but not exclusively asbestos. The portability of the unit is important as it must be capable of being transported from site to site. It may be designed for being transported on a trailer or other means, or it may have its own wheels, so that it has mobility. It may have its own self propelling means.

It is becoming increasingly evident that there are severe health hazards in the use of many types of asbestos and for this reason such asbestos as has previously been installed in buildings or on other sites as for example insulating material, is being ordered to be removed to prevent further danger to users of the building or the site. However, the very removal of the asbestos itself is a hazardous operation and extreme care needs to be taken in the handling of the material.

The present invention seek to provide a means for the effective handling of removed asbestos pieces nd particles.

According to the invention there is provided portable decontamination unit for the recovering and disposal of hazardous materials on site, comprising a substantially enclosed cell with equipment for disposal and recovery of hazardous materials, a substantially enclosed decontamination cell with facilities for decontamination of operators, and a clean cell by which operators enter and leave the unit, the unit having sealable access means enabling the isolation of the respective cells but enabling the movement of operators between the cells.

Preferably, the unit is a mobile unit, the decontamination cell includes operator shower facilities and a drain for collecting the water used for such showering.

Preferably also, the disposal and recovery cell includes air extraction and purification means arranged to draw air from the clean cell through the decontamination cell, then through the recovery and disposal cell.

Preferably, the disposal and recovery cell has exit and entry doors to which is connected trunking enabling operators on the one hand to move along the trunking to the zone where hazardous material removal is taking place, and on the other hand to a disposal zone formed for example by a skip or other container.

Preferably also, the recovery and disposal cell contains a separator for separating larger pieces of hazardous material from the air, and a bagging unit for bagging such pieces of hazardous material.

Whilst it is important that the unit should as far as possible provide for the protection of the operators, it is equally or even more important that the environment should be protected. However, the operations of recovery and disposal themselves tend to release significant quantities of asbestos fibre into the air immediately surrounding the site of the operations. To reduce the risk of these fibres spreading into the general atmosphere in the vicinity of the unit, whether in use or in transit, to the danger of members of the oublic who are not wearing protective clothing and masks, we prefer that means may be provided so that the air in the unit may be kept at a pressure lower than that of the atmosphere outside the unit.   These means may comprise exhaust means arranged to withdraw air from within the unit and discharge it outside the unit through filter means.

An embodiment of the invention will now be described by way of example and with reference to the accompanying drawing, which are to scale and of which:-

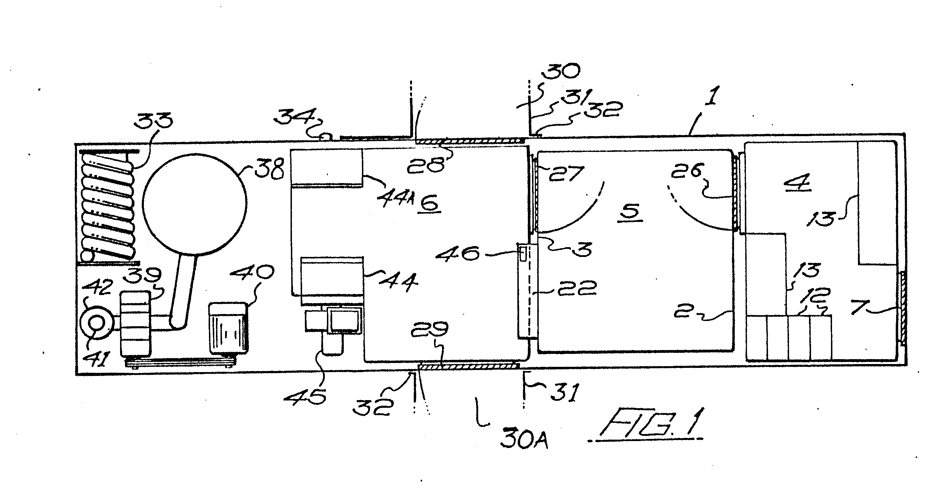

Fig. 1 is a plan view;  and

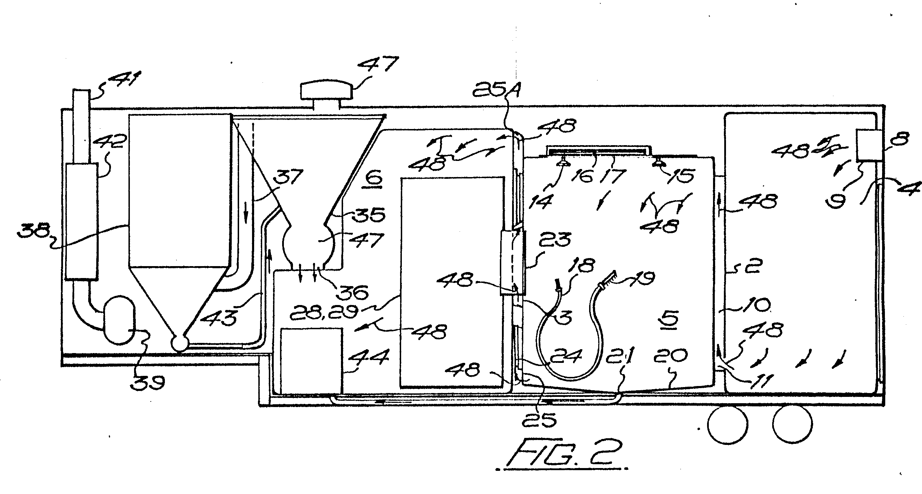

Fig. 2 is a schematic side elevation of a mobile trailer unit for the disposal of hazardous wastes.

As shown in the figures, the unit comprises a substantially enclosed elongate chamber 1, having wheels 1A and divided by transverse walls 2, 3 so as to define a clean cell 4, a decontamination cell 5 and a disposal cell 6.  The trailer is approximately 3 metres high, 2.25 metres wide and 9 metres long.

Access for operatives to the chamber is provided by a sealable door 7 which opens outwardly from the clean cell 4.   Towards the ceiling of the clean cell is an air inlet 8 whilst on the inside of the cell 4 an 11 kw heater 9 is arranged in alignment with the air inlet so that air introduced into the cell therethrough is heated.   An air exhaust duct 10 in wall 2 has an inlet 11 near the floor of the cell 4 and an outlet to the decontamination cell 5 near the ceiling thereof.

The clean cell contains lockers 12 for operatives' garments and other possessions as well as seats 13 for the use of operatives during rest periods.

Shower units are provided in the decontamination cell 5 and take the form of blast shower heads 14 in the ceiling and walls and personal hot water shower heads 15 in the ceiling. Fluorescent lighting tubes 16 are located behind perspex panels 17 in recesses in the ceiling of the decontamination cell. The cell 5 also has one or more flexible hose pipes 18 connectible to a source of water at a suitable pressure and terminating in a scrub-down brush 19. The floor 20 of the decontamination cell 5 is inclined downwards to a central drain 21 from which water is pumped to a setting and filtration tank 44A in the disposal cell 6.

A cupboard 22 having a perspex door 23 opening into the decontamination cell 5 is located in the wall 3 between the decontamination cell and the disposal cell. An air duct 24 is also located in the wall 3 and is in connection with an inlet 25 from cell 5 near the floor and an outlet 25A near the ceiling of cell 6. The duct 24 also communicates with the cupboard 22 so that articles placed in the cupboard are subjected to the flow of any air passing through the duct 24 for decontamination of articles therein. As explained below the cupboard is for containing operatives' respirators and batteries during the decontamination procedure.

A door 26 in wall 2 opens inwardly into cell 5 and gives access between cells 4 and 5 whilst a door 27 in wall 3 also opens inwardly into cell 5 to give access between cells 5 and 6. Each of the doors 26 and 27 is, like the door 7 a sealing fit in its associated wall when closed.

As will be explained below, cells 4 and 5 are used by operatives in preparing for work and cleaning after work; the waste disposal work itself is generally carried out in the cell 6 with the door 27 closed.

The side walls of the cell 6 are provided with doors 28, 29, which open outwardly in use respectively into tunnels 30, 30A, defined by walls 31 of impervious sheet material secured to the outer wall of the unit by a flanged seal 32. In use, the unit is taken to the vicinity of the source of the waste material and the tunnels are secured outside the periphery of the doors 28, 29 so that one reaches to the source and operatives can open door 28 and move out of the cell 6, closing the door behind him, into the tunnel 30 and walk along the tunnel to the source of the waste and back into the cell 6 without discharging any waste particles into the atmosphere outside the unit. The door 29 gives access to a similar tunnel 30A which is arranged to lead to a waste disposal site such as a skip.

As a primary means of disposal of the waste material a suction hose, stored at the front of the unit when not in use as shown at reference 33 is coupled to a closable hose inlet 34 which leads internally of the chamber into a primary particle separator 35 of conventional type. As one of the tunnels 30 is being stretched to the source of waste so the hose 33 is attached to the inlet 34 and the other end taken to the source of the waste. Then when the work of recovery begins the primary separator 35 is connected to a source of suction and waste material is drawn through the hose and into the primary separator 35 through the inlet 34, the solid waste particles being dropped through exit port 36, which is controlled by a rotary valve 47, into bags (not shown) whilst the air is conveyed through duct 37 into a secondary filter 38. When one bag has been filled, the port 36 is automatically closed by valve 47 until another bag is in position. The aforementioned suction is provided by a positive displacement blower 39 connected to filter 38 and driven by a motor 40, and the filtered air is passed out to atmosphere through pipe 41 having passed through an exhaust silencer 42. Solid waste collected by the filter 38 is returned to the separator 35 through pipe 43 so that port 36 is the only point within the unit at which the waste material is discharged. Indeed the units 38, 39 and 40 are all sealed off from cell 6, and the only connection from separator 35 to cell 6 is the port 36.

The flow of air through the unit from the inlet 8 and the ducts 10, 24 as shown by arrows 48 is effected by an air extraction apparatus 44 placed in the vicinity of the bagging zone below the port 36 so that any dust liberated during the bagging is immediately collected into the extraction apparatus 44. The apparatus 44 maintains the whole unit at an air pressure significantly below atmospheric, so that any leaks for example on opening any external door, are inward of the unit. The apparatus 44 is driven by electric motor 45 switched on and off from the clean cell 4. The apparatus 44 uses disposable filter elements which are replaced from time to time as required, and discharge filtered air to atmosohere.

The settling and filtration tank 44A, which filters waste from the decontamination cell, discharges filtered water outside the unit. The filters are removed when necessary, disposed of with the asbestos and replaced by new ones.

In use of the unit, when it has been positioned adjacent the source of waste and the disposal site with the tunnels 30, 30A stretched out to the source of the waste and the disposal site respectively and the suction hose 33 coupled to the inlet 34 and arranged with its other end at the waste source, the disposal operatives enter the clean cell 4 through the door 7, close the door 7 and put their belongings and outer garments in the lockers 12 and enter the decontamination cell 5 through the door 26. In the decontamination cell operatives, having closed the door 26, put on overalls which are hung on one of the walls of the cell and put on respirators and batteries which are stored in the cupboard 22. Thus equipped, they open the door 27 and enter the disposal cell 6 closing the door 27 behind them. From the cell 6 they are able as already explained to pass into the tunnels 30, 30A to operate at the actual source of the waste and either conveying material from the source manually through one tunnel 30 into the cell and out through the other tunnel 30A to the disposal site or, preferably, by using the suction hose 33 arranging for the material to be conveyed through that hose into the separator 35. Other operatives in the cell 6 arrange for the bagging of waste falling from the port 36 and the removal of the filled bags through the door 29 and tunnel 30A to the disposal site.

At the end of a work shift the operatives return to the decontamination cell 5 closing door 27 behind them. Their respirators are placed in the cupboard 22 and any respirator filters requiring disposal are disposed of at disposal point 46 within the cupboard 22. Rechargeable batteries are also placed in the cupboard 22 and connected to a recharging unit (not shown) located in the cupboard 22. Then by use of any or all of the washing means 14, 15, 19, the operatives wash themselves and their overalls thoroughly, the waterborne contaminants being carried through the drain 21 and any air-borne waste particles being carried through the air inlet 25 and eventually reaching the setting and filtration unit 44A. The operatives then remove their overalls and hang them on the wall of the decontamination cell which are thermally insulated by the use of semi-rigid glass fibre insulation.    The
operatives then have a personal shower, leave the
decontamination cell by the door 26 and put on their
outer garments from the lockers 12 in the clean cell 4,
having closed the door 26 behing them.    Finally they
leave the clean cell by the door 7.

In order to maintain moisture pressure within the unit
when the unit is in transit, for example as a trailer
unit behind a traction unit, air is extracted from the
interior of the chamber and exhausted to atmosphere
through extractor vent 47. The vent 47 is associated
with a filter to prevent escape of any hazardous
material therethrough.    Whilst the waste disposal
operatives using the unit are inevitably exposed to the
hazardous material with which they are dealing, the
unit provides as far as possible for the elimination of
unnecessary hazard to their well being and,
particularly, is intended that dust is caputred at
source so as to reduce to the minimum the escape of
hazardous materials into the environtment around the
waste source.

In order to assist in the maintenance of negative
pressure in the unit, it is important to keep all doors
closed when not in use, and warning means are provided
to signal if any door is left open.

Various types of separators and bagging systems may be
employed.    For example the  separator may be a Shirley
wheel, a cyclone or a simple dump chamber, and instead
of the utilisation of the rotary valve for the bagging
mechanism, bagging may be effected by a compactor
method.

In loading the hazardous material into a skip, the skip
may be a closed skip and may be provided with a lining

0137699

bag into which the material is charged. When the bag has been filled, a vacuum may be applied thereto in order to remove air from the inside of the bag, and eventually the bag sealed for disposal.

Whilst the appended claims seek to define the present invention as envisaged by the applicant at the time of submitting this application, the applicant reserves the right within the law to claim as an invention in general or specific terms, whether by way of divisional application or otherwise, any feature, method and/or aspect or any combination of features, methods and/or aspects disclosed herein which is or are subsequently identified to be inventive, and regardless of whether, in the case of a combination as aforesaid, the features, methods and/or aspects are disclosed individually in a single one of or in respective ones of the embodiments disclosed herein.

CLAIMS

------

1. Portable decontamination unit for the recovering and disposal of hazardous materials on site, comprising a substantially enclosed cell with equipment for disposal and recovery of hazardous materials, a substantially enclosed decontamination cell with facilities for decontamination of operators, and a clean cell by which operators enter and leave the unit, the unit having sealable access means enbaling the isolation of the respective cells but enabling the movement of operators between the cells,

2. A unit according to claim 1, wherein the unit is a mobile unit.

3. A unit according to claim 1 or 2, wherein the decontamination cell includes operator shower facilities and a drain for collecting the water used for such shower.

4. A unit according to claim 3, wherein the drain leads to water contaminant filtering means located in the disposal and recovering cell.

5. A unit according to any preceding claim wherein the disposal and recovery cell includes air extraction and purification means arranged to drain air from the clean cell through the decontamination cell, then through the recovery and disposal cell.

6. A unit according to claim 5, wherein the air drawn by said air extraction and purification means is drawn through passages formed in dividing walls located between the clean cell and decontamination cell on the one hand, and between the decontamination cell and recovery and disposal cell on the other hand.

7. A unit according to claim 6, wherein said dividing wall between the decontamination cell and recovery and disposal cell has a cupboard for operator equipment and clothing and the air flow passes through said cupboard.

8. A unit according to any preceding claim, wherein the disposal and recovery cell has exit and entry doors to which is connected trunking enabling operators to move along the trunking on the one hand to the zone where hazardous material removal is taking place, and on the other hand to a disposal zone formed for example by a skip or other container.

9. A unit according to any preceding claim including means for maintaining the air in the unit generally at a pressure below that outside the unit.

10. A unit according to any preceding claim, wherein the recovery and disposal cell contains a separator for separating larger pieces of hazardous material from the air, and a bagging unit for bagging such pieces of hazardous material.

11. A unit according to claim 10, wherein the recovery and disposal cell includes a filter arranged in series with the separator for separating smaller particles of hazardous material from the air, and for returning same to be bagged with the larger pieces in the bagging unit.

12. A unit according to claims 10 or 11 wherein the recovery and disposal cell has an inlet to which is connected one end of a tube, the other end of which is for location in the vicinity of the working zone, and including means for pneumatically conveying removed pieces of hazardous material alang the tube to the recovery and disposal cell.

0137699

FIG.1

0137699

FIG. 2